# EUROPEAN PATENT SPECIFICATION

(11) **EP 4 714 836 B1**
(45) Date of publication and mention of the grant of the patent: **24.06.2026**
(21) Application number: 24201797.8
(22) Date of filing: 20.09.2024
(51) Int. Cl.: B64U 10/13, H04W 4/021

(54) **METHOD FOR USING A SERVICE ENABLER ARCHITECTURE LAYER FOR VERTICALS, SEAL, AND AN UNCREWED AERIAL SYSTEM APPLICATION ENABLER LAYER, UAE LAYER, WITH AN UNCREWED AERIAL SYSTEM APPLICATION SPECIFIC LAYER IMPLEMENTATION FOR MANAGING NO-TRANSMISSION ZONE COMMUNICATION AND/OR FOR ENFORCING NO-TRANSMISSION ZONE INFORMATION WITH AT LEAST ONE UNCREWED AERIAL SYSTEM USER EQUIPMENT, SYSTEM OR TELECOMMUNICATIONS NETWORKS, UNCREWED AERIAL SYSTEM USER EQUIPMENT, PROGRAM AND COMPUTER-READABLE MEDIUM**
VERFAHREN ZUR NUTZUNG EINER SERVICE-ENABLER-ARCHITEKTUR-EBENE FÜR BRANCHENSPEZIFISCHE ANWENDUNGEN, SEAL UND EINER ANWENDUNGS-ENABLER-EBENE FÜR UNBEMANNTE LUFTFAHRTSYSTEME, EINER UAE-SCHICHT, MIT EINER ANWENDUNGSSPEZIFISCHEN IMPLEMENTIERUNG DER UNBEMANNTEN FLUGSYSTEM-ANWENDUNGSSCHICHT ZUR VERWALTUNG DER KOMMUNIKATION IN SENDUNGSFREIEN ZONEN UND/ODER ZUR DURCHSETZUNG VON INFORMATIONEN ZU SENDUNGSFREIEN ZONEN MIT MINDESTENS EINEM UNBEMANNTEN FLUGSYSTEM-BENUTZERGERÄT, SYSTEM ODER TELEKOMMUNIKATIONSNETZWERK, BENUTZERGERÄT FÜR UNBEMANNTE FLUGSYSTEME, PROGRAMM UND COMPUTERLESBARES MEDIUM
PROCÉDÉ D'UTILISATION D'UNE COUCHE D'ARCHITECTURE D'ACTIVATEUR DE SERVICES POUR LES SECTEURS VERTICAUX, SEAL ET D'UNE COUCHE D'ACTIVATEUR D'APPLICATIONS POUR SYSTÈMES AÉRIENS SANS PILOTE, COUCHE UAE, AVEC UNE IMPLÉMENTATION DE COUCHE SPÉCIFIQUE AUX APPLICATIONS DE SYSTÈMES AÉRIENS SANS PILOTE POUR GÉRER LA COMMUNICATION DANS LES ZONES D'INTERDICTION DE TRANSMISSION ET/OU POUR APPLIQUER LES INFORMATIONS RELATIVES AUX ZONES D'INTERDICTION DE TRANSMISSION AVEC AU MOINS UN ÉQUIPEMENT UTILISATEUR DE SYSTÈME AÉRIEN SANS PILOTE, UN SYSTÈME OU DES RÉSEAUX DE TÉLÉCOMMUNICATIONS, ÉQUIPEMENT UTILISATEUR DE SYSTÈME AÉRIEN SANS PILOTE, PROGRAMME ET SUPPORT LISIBLE PAR ORDINATEUR

(43) Date of publication of application: 25.03.2026
(73) Proprietor: Deutsche Telekom AG, 53113 Bonn (DE)
(72) Inventor: ALEKSIEV, Vasil, 1030 Wien (AT)
(74) Representative: Schwöbel, Thilo K.

(56) References cited:
- KR-A- 20220 057 478
- US-A1- 2016 189 549
- US-A1- 2024 267 817

## Description

### BACKGROUND

The present invention relates a method for using a service enabler architecture layer for verticals, SEAL, and an uncrewed aerial system application enabler layer, UAE layer, with an uncrewed aerial system application specific layer implementation for managing no-transmission zone communication and/or for enforcing no-transmission zone information with at least one uncrewed aerial system user equipment, wherein a service enabler architecture layer server, an uncrewed aerial system application enabler server, and an uncrewed aerial system application specific server are used.

Additionally, the present invention relates to a system or to a telecommunications networks for using a service enabler architecture layer for verticals, SEAL, and an uncrewed aerial system application enabler layer, UAE layer, with an uncrewed aerial system application specific layer implementation for managing no-transmission zone communication and/or for enforcing no-transmission zone information with at least one uncrewed aerial system user equipment, wherein a service enabler architecture layer server, an uncrewed aerial system application enabler server, and a uncrewed aerial system application specific server are used.

Additionally, the present invention relates to an uncrewed aerial system user equipment for being used with a service enabler architecture layer for verticals, SEAL, and an uncrewed aerial system application enabler layer, UAE layer, with an uncrewed aerial system application specific layer implementation for managing no-transmission zone communication and/or for enforcing no-transmission zone information with at least one uncrewed aerial system user equipment, wherein a service enabler architecture layer server, an uncrewed aerial system application enabler server, and a uncrewed aerial system application specific server are used.

Furthermore, the present invention relates to a program and to a computer-readable medium for using a user equipment in the framework of service enabler architecture layer for verticals according to the inventive method.

In conventionally known mobile communication network, it is known to use uncrewed aerial systems (or, unmanned aerial systems) - in the context of the present invention used synonymously with the term uncrewed aerial vehicles - such as, e.g., drones. Uncrewed aerial vehicles (UAVs), i.e. drones, require specific functionality, and 5G systems are able to provide specific support for these types of devices. One very important issue is that of compliance to local regulation, and an important regulation is that of no-transmission zones (NTZs). Transmission using certain frequencies at certain locations are protected and/or not allowed to be used according to local regulation. Furthermore, NTZs can be additionally and/or complementary restricted in their applicability in terms of height and/or time validity. The reasons for these limitations are typically to protect radio-based equipment from interference, such as radars (e.g. military, civil, weather) or radioastronomy telescopes. When entering such no-transmission zone or no-transmission areas (hereinafter also called no-transmit zones), a drone, or uncrewed aerial vehicle (or uncrewed aerial system), must comply with local regulations; after it leaves the no-transmit zone, it can then again normally transmit on the frequencies that were restricted in the no-transmission zone.

Document US 2024/0267817 A1 describes systems and methods for maintaining secure and reliable command and control (C2) communications between uncrewed aerial vehicles (UAVs) and their controllers via public land mobile networks (PLMNs), using a layered architecture comprising SEAL and UAE components. The system does not address transmission suppression or enforcement of no-transmission zones.

Document KR 10-2022-0057478 A describes a system and method for dynamically setting UAV no-fly zones based on external control information, such as time, location, and security requirements, provided by authorized requesters.

Document US 2016/0189549 A1 describes a system for managing drone airspace access through a configurable flight zone database that defines areas with restricted behaviors, such as no-fly or no-camera zones.

The present invention provides enhancements to the 5G system to better support no-transmit zones, especially regarding how to configure the entities involved in view of and in order to implement policies related to no-transmission zones.

### SUMMARY

An object of the present invention is to provide a technically simple, effective and cost-effective solution for using a service enabler architecture layer for verticals, SEAL, and an uncrewed aerial system application enabler layer, UAE layer, with an uncrewed aerial system application specific layer implementation for managing no-transmission zone communication and/or for enforcing no-transmission zone information with at least one uncrewed aerial system user equipment. A further object of the present invention is to provide a corresponding system or a corresponding telecommunications networks or a corresponding user equipment, and a corresponding program and computer-readable medium.

The present invention is defined by the subject-matter of the independent claims. Further detailed embodiments are defined in the dependent claims. The object of the present invention is achieved by a method for using a service enabler architecture layer for verticals, SEAL, and an uncrewed aerial system application enabler layer, UAE layer, with an uncrewed aerial system application specific layer implementation for managing no-transmission zone communication and/or for enforcing no-transmission zone information with at least one uncrewed aerial system user equipment,
characterized in that, a service enabler architecture layer server, an uncrewed aerial system application enabler server, a uncrewed aerial system application specific server and a location management server are used and the at least one uncrewed aerial system user equipment comprises, respectively, an uncrewed aerial system application specific client, an uncrewed aerial system application enabler client, and a service enabler architecture layer client,
wherein, in order for managing no-transmission zone communication and/or for enforcing no-transmission zone information to the at least one uncrewed aerial system user equipment, the method comprises the following steps:
   -- in a first step, the uncrewed aerial system application enabler server receives a location information from the location management server,
   -- in a second step, the uncrewed aerial system application enabler server communicates with both the uncrewed aerial system application enabler client and the uncrewed aerial system application specific server.

According to the present invention, it is advantageously possible that the uncrewed aerial system application specific server and the uncrewed aerial system application enabler server supports managing no-transmission zone communication and/or enforcing no-transmission zone information with the at least one uncrewed aerial system user equipment. Hence, the use of the at least one uncrewed aerial system user equipment is able to be improved according to the present invention.

According to the present invention, it is especially possible to support and provide no-transmission zone communication and/or enforce no-transmission zone information especially to uncrewed aerial system user equipments, and to use a service enabler architecture layer for verticals, SEAL, and an uncrewed aerial system application enabler layer, UAE layer, with an uncrewed aerial system application specific layer implementation for managing no-transmission zone communication and/or for enforcing no-transmission zone information with at least one uncrewed aerial system user equipment via a telecommunications network, especially a mobile communication network.

According to the present invention, a service enabler architecture layer server, an uncrewed aerial system application enabler server, and a uncrewed aerial system application specific server are used.

Furthermore, according to the present invention, the at least one uncrewed aerial system user equipment comprises, respectively, an uncrewed aerial system application specific client, an uncrewed aerial system application enabler client, and a service enabler architecture layer client.

According to the present invention, it is furthermore especially preferred that service enabler architecture layer for verticals comprises the (or one) service enabler architecture layer server (and, especially, the service enabler architecture layer client(s)), and/or the uncrewed aerial system application enabler layer comprises the (or one) uncrewed aerial system application enabler server (and, especially, the uncrewed aerial system application enabler client(s)), and/or the uncrewed aerial system application specific layer implementation comprises the (or one) uncrewed aerial system application specific server (and, especially, the uncrewed aerial system application specific client(s)). In order to manage no-transmission zone communication and/or to enforce no-transmission zone information with the at least one uncrewed aerial system user equipment, the method comprises the following steps:
-- in a first step, the uncrewed aerial system application enabler server receives a location information from the location management server,
-- in a second step, the uncrewed aerial system application enabler server communicates with both the uncrewed aerial system application enabler client and the uncrewed aerial system application specific server.

This advantageously provides the possibility, according to the present invention, to provide procedures, service flows and APIs such as to manage no-transmission zone communication and/or to enforce no-transmission zone information with at least one uncrewed aerial system user equipment.

According to the present invention, it is furthermore advantageously possible and preferred that the communication between the uncrewed aerial system application enabler server and the uncrewed aerial system application enabler client comprises
-- an enforce no-transmission zone request message that is transmitted by the uncrewed aerial system application enabler server and received by the uncrewed aerial system application enabler client, and
-- an enforce no-transmission zone response message that is transmitted by the uncrewed aerial system application enabler client and received by the uncrewed aerial system application enabler server,
wherein especially and subsequently a no-transmission zone notification message is transmitted, by the uncrewed aerial system application enabler server, to the uncrewed aerial system application specific server.

It is thereby advantageously possible to realize and implement the inventive method in a comparatively simple and efficient manner.

Furthermore, it is advantageously possible and preferred according to the present invention that the communication between the uncrewed aerial system application enabler server and the uncrewed aerial system application enabler client furthermore comprises
-- an operation permission request message that is transmitted by the uncrewed aerial system application enabler client and received by the uncrewed aerial system application enabler server, and
-- an operation permission response message that is transmitted by the uncrewed aerial system application enabler server and received by the uncrewed aerial system application enabler client.

It is thereby advantageously possible to realize and implement the inventive method in a comparatively simple and efficient manner.

According to the present invention, it is furthermore advantageously possible and preferred that the enforce no-transmission zone request message comprises:
-- an uncrewed aerial system identifier information,
-- an information regarding, or indicating, an area for deactivation transmission,
-- a specific time window for deactivating the transmission,
-- an information regarding, or indicating, frequency bands,
-- an information regarding, or indicating, an altitude or an altitude range of, regarding, the no-transmission zone.

It is thereby advantageously possible to realize and implement the inventive method in a comparatively simple and efficient manner.

Furthermore, it is advantageously possible and preferred according to the present invention that the no-transmission zone notification message comprises:
-- an uncrewed aerial system identifier information,
-- an information regarding, or indicating, whether transmission is switched on or off,
-- an information regarding, or indicating, time,
-- an information regarding, or indicating, location information and altitude.

It is thereby advantageously possible to efficiently realize and implement the inventive method in a comparatively simple and flexible manner.

Furthermore, it is advantageously possible and preferred according to the present invention that the enforce no-transmission zone response message comprises an enforce response result information, especially indicating a positive or negative result of the enforce no-transmission zone request message.

It is thereby advantageously possible to realize and implement the inventive method in a comparatively simple and efficient manner.

Furthermore, it is advantageously possible and preferred according to the present invention that the operation permission request message comprises:
-- an uncrewed aerial system identifier information,
-- an information regarding, or indicating, frequency bands,
-- an information regarding, or indicating, location information, and altitude, especially location information of the uncrewed aerial system application enabler client, or the uncrewed aerial system, at the time when the operation permission request message is sent,
-- an information regarding, or indicating, time, especially the specific time when the uncrewed aerial system application enabler client, or the uncrewed aerial system, has left the no-transmission zone.

It is thereby advantageously possible to realize and implement the inventive method in a comparatively simple and efficient manner.

According to the present invention, it is furthermore advantageously possible and preferred that the operation permission response message comprises a permission response result information, especially indicating a positive or negative result of the operation permission request message.

It is thereby advantageously possible to realize and implement the inventive method in a comparatively simple and efficient manner.

Furthermore, the present invention relates to a system or to a telecommunications network for using a service enabler architecture layer for verticals, SEAL, and an uncrewed aerial system application enabler layer, UAE layer, with an uncrewed aerial system application specific layer implementation for managing no-transmission zone communication and/or for enforcing no-transmission zone information with at least one uncrewed aerial system user equipment,
characterized in that, a service enabler architecture layer server, an uncrewed aerial system application enabler server, a uncrewed aerial system application specific server and a location management server are used and the at least one uncrewed aerial system user equipment comprises, respectively, an uncrewed aerial system application specific client, an uncrewed aerial system application enabler client, and a service enabler architecture layer client,
wherein, in order for managing no-transmission zone communication and/or for enforcing no-transmission zone information to the at least one uncrewed aerial system user equipment, the system of telecommunications network is configured such that the uncrewed aerial system application enabler server receives a location information from the location management server, and the uncrewed aerial system application enabler server communicates with both the uncrewed aerial system application enabler client and the uncrewed aerial system application specific server.

Additionally, the present invention relates to an uncrewed aerial system user equipment for being used with a service enabler architecture layer for verticals, SEAL, and an uncrewed aerial system application enabler layer, UAE layer, with an uncrewed aerial system application specific layer implementation for managing no-transmission zone communication and/or for enforcing no-transmission zone information with at least one uncrewed aerial system user equipment,
characterized in that, a service enabler architecture layer server, an uncrewed aerial system application enabler server, a uncrewed aerial system application specific server and a location management server are used and the at least one uncrewed aerial system user equipment comprises, respectively, an uncrewed aerial system application specific client, an uncrewed aerial system application enabler client, and a service enabler architecture layer client,
wherein, in order for managing no-transmission zone communication and/or for enforcing no-transmission zone information to the at least one uncrewed aerial system user equipment, the uncrewed aerial system user equipment is configured such that the uncrewed aerial system application enabler server receives a location information from the location management server, and the uncrewed aerial system application enabler server communicates with both the uncrewed aerial system application enabler client and the uncrewed aerial system application specific server.

Additionally, the present invention relates to a program comprising a computer readable program code which, when executed on a computer and/or on an uncrewed aerial system user equipment and/or on a network node of a telecommunications network and/or on an uncrewed aerial system application specific server and/or on an uncrewed aerial system application enabler server and/or on an uncrewed aerial system application enabler client, and/or in part on a network node of a telecommunications network and/or in part on an uncrewed aerial system application specific server and/or in part on an uncrewed aerial system application enabler server and/or in part on an uncrewed aerial system application enabler client, causes the computer and/or the uncrewed aerial system user equipment and/or the network node of a telecommunications network and/or the uncrewed aerial system application specific server and/or the uncrewed aerial system application enabler server and/or the uncrewed aerial system application enabler client to perform the inventive method.

Additionally, the present invention relates to a computer-readable medium comprising instructions which when executed on a computer and/or on an uncrewed aerial system user equipment and/or on a network node of a telecommunications network and/or on an uncrewed aerial system application specific server and/or on an uncrewed aerial system application enabler server and/or on an uncrewed aerial system application enabler client, and/or in part on a network node of a telecommunications network and/or in part on an uncrewed aerial system application specific server and/or in part on an uncrewed aerial system application enabler server and/or in part on an uncrewed aerial system application enabler client, causes the computer and/or the uncrewed aerial system user equipment and/or the network node of a telecommunications network and/or the uncrewed aerial system application specific server and/or the uncrewed aerial system application enabler server and/or the uncrewed aerial system application enabler client to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

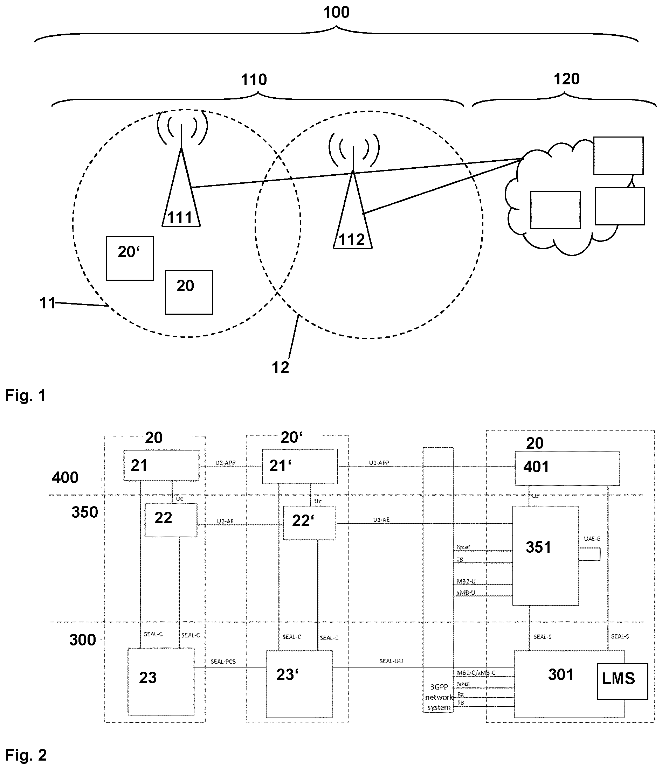

Figure 1 schematically illustrates a telecommunications network, comprising an access network and a core network, and a user equipment, wherein a service enabler architecture layer for verticals, SEAL, and an uncrewed aerial system application enabler layer, UAE layer, is used with an uncrewed aerial system application specific layer implementation for managing no-transmission zone communication and/or for enforcing no-transmission zone information with at least one uncrewed aerial system user equipment; the uncrewed aerial system user equipment is a uncrewed aerial system user equipment comprising an uncrewed aerial system application specific client, an uncrewed aerial system application enabler client, and a service enabler architecture layer client.
Figure 2 schematically illustrates a representation of an exemplary implementation of the service enabler architecture layer for verticals (together with the uncrewed aerial system application enabler layer, UAE layer, and the uncrewed aerial system application specific layer implementation) for managing no-transmission zone communication and/or for enforcing no-transmission zone information with the at least one uncrewed aerial system user equipment.

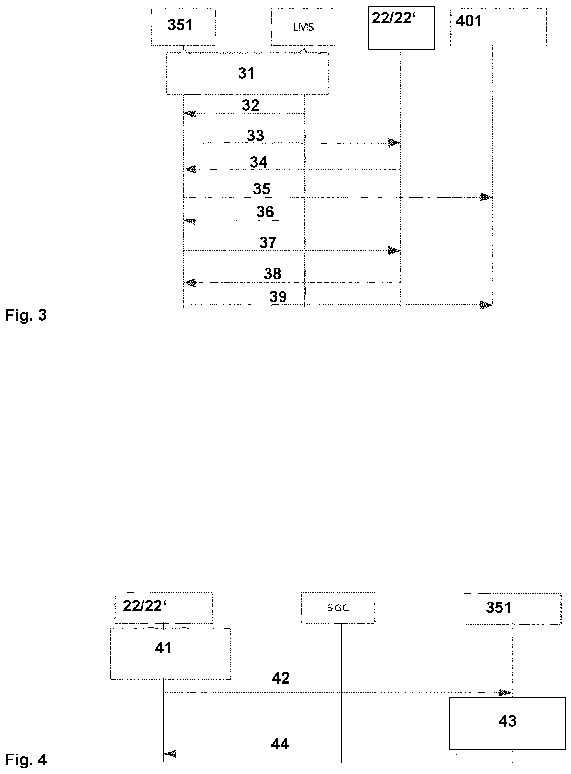

Figure 3 schematically illustrates a communication diagram between the uncrewed aerial system application enabler server, the location management server, the uncrewed aerial system application specific server, and the uncrewed aerial system application enabler client.
Figure 4 schematically illustrates a representation of the communication of the uncrewed aerial system application enabler server with the uncrewed aerial system application enabler client.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a telecommunications network 100, comprising an access network 110 and a core network 120, and a (first) user equipment 20 (as well as a (second) user equipment 20') is schematically shown.

A service enabler architecture layer for verticals, SEAL, is used with an uncrewed aerial system application enabler layer, UAE layer, with an uncrewed aerial system application specific layer implementation for managing no-transmission zone communication and/or for providing no-transmission zone information to at least one uncrewed aerial system user equipment 20, 20'.

The uncrewed aerial system user equipment 20, 20' uses services provided by a uncrewed aerial system application specific layer implementation, i.e. typically a service provider domain, being typically (but not necessarily) external to the telecommunications network 100.

The telecommunications network 100 is especially realized as mobile (cellular) communication network 100. The telecommunications network 100, especially its core network 120, typically comprises a number of network functions or services that are, however and for the sake of simplification, not explicitly and separately indicated, in Figure 1, by means of reference signs. The access network 110 of the telecommunications network 100 exemplary comprises a plurality of radio cells 11, 12. In the exemplary situation or scenario shown in Figure 1, a first base station entity 111 generates or is associated with or spans the first radio cell 11, and a second base station entity 112 generates or is associated with or spans the second radio cell 12. In the exemplary situation shown in Figure 1, the uncrewed aerial system user equipment 20 (if connected to or with the telecommunications network 100) is connected, via a radio interface or air interface, to the first base station entity 111 of the access network 110 of the telecommunications network 100.

According to the present invention, the uncrewed aerial system user equipment 20 is an uncrewed aerial system user equipment comprising an uncrewed aerial system application specific client 21 - not explicitly and separately shown in Figure 1 by means of a reference sign -, an uncrewed aerial system application enabler client 22 - likewise not separately shown in Figure 1 by means of a reference sign -, and a service enabler architecture layer client 23 (not shown, in Figure 1, either).

The uncrewed aerial system user equipment 20 is typically a mobile user equipment, namely as part of a uncrewed aerial system or uncrewed aerial vehicle.

The radio cells 11, 12 are typically - but not necessarily - static radio cells 11, 12, typically corresponding to static (but not necessarily) base station entities 111, 112 of the access network 110.

According to the present invention, it is advantageously possible to use the uncrewed aerial system user equipment 20 in relation to or in the framework of service enabler architecture layer for verticals, SEAL, with the telecommunications network 100.

In Figure 2, a representation of an exemplary implementation of the service enabler architecture layer for verticals, SEAL, 300 (together with the uncrewed aerial system application enabler layer, UAE layer, 350 and the uncrewed aerial system application specific layer implementation 400) for managing no-transmission zone communication and/or for enforcing no-transmission zone information with the at least one uncrewed aerial system user equipment 20, 20' is schematically shown.

The uncrewed aerial system user equipment 20 (or, first uncrewed aerial system user equipment) is represented as comprising a corresponding uncrewed aerial system application specific client 21, a corresponding uncrewed aerial system application enabler client 22, and a corresponding service enabler architecture layer client 23. Furthermore, the uncrewed aerial system user equipment 20' (or, second uncrewed aerial system user equipment) is represented as comprising a corresponding (further) uncrewed aerial system application specific client 21', a corresponding (further) uncrewed aerial system application enabler client 22', and a corresponding (further) service enabler architecture layer client 23'. In the context of the present invention, the uncrewed aerial system user equipments 20, 20' are also designated by means of uncrewed aerial vehicles or UAV-C.

The service enabler architecture layer for verticals, SEAL, 300 comprises a service enabler architecture layer server 301, and, preferably the service enabler architecture layer client 23 (of the uncrewed aerial system user equipment 20) as well the (further) service enabler architecture layer client 23' (of the uncrewed aerial system user equipment 20'). The uncrewed aerial system application enabler layer, UAE layer, 350 comprises an uncrewed aerial system application enabler server 351, and, preferably the uncrewed aerial system application enabler client 22 (of the uncrewed aerial system user equipment 20) as well the (further) uncrewed aerial system application enabler client 22' (of the uncrewed aerial system user equipment 20'). The uncrewed aerial system application specific layer implementation 400 comprises an uncrewed aerial system application specific server 401, and, preferably the uncrewed aerial system application specific client 21 (of the uncrewed aerial system user equipment 20) as well the (further) uncrewed aerial system application specific client 21' (of the uncrewed aerial system user equipment 20'). Together, the service enabler architecture layer server 301, the uncrewed aerial system application enabler server 351 as well as the uncrewed aerial system application specific server 401 are also designated by the term uncrewed aerial system application server 400'. Especially, according to the present invention, the service enabler architecture layer server 301 comprises an location management server LMS.

The uncrewed aerial system application specific client 21 (as well as the (further) uncrewed aerial system application specific client 21') communicates with the uncrewed aerial system application enabler client 22 (or the further uncrewed aerial system application enabler client 22', respectively) using a Uc interface or reference point.

The service enabler architecture layer client 23 communicates with both the uncrewed aerial system application specific client 21 and the uncrewed aerial system application enabler client 22 using a SEAL-C interface or reference point (and, likewise, the (further) service enabler architecture layer client 23' communicates with both the (further) uncrewed aerial system application specific client 21' and the (further) uncrewed aerial system application enabler client 22' using a SEAL-C interface or reference point.

The uncrewed aerial system application specific client 21 communicates with the uncrewed aerial system application specific server 401 using a U1-APP interface or reference point. The (further) uncrewed aerial system application specific client 21' communicates with the uncrewed aerial system application specific server 401 using a U2-APP interface or reference point. The uncrewed aerial system application enabler client 22 communicates with the uncrewed aerial system application enabler server 351 using a U1-AE interface or reference point. The (further) uncrewed aerial system application enabler client 22' communicates with the uncrewed aerial system application enabler server 351 using a U2-AE interface or reference point. The service enabler architecture layer client 23 communicates with the service enabler architecture layer server 301 using a SEAL-UU interface or reference point. The (further) service enabler architecture layer client 23' communicates with the service enabler architecture layer server 301 using a SEAL-UU interface or reference point, and the service enabler architecture layer client 23 communicates with the further service enabler architecture layer client 23' using a SEAL-PC5 interface or reference point.

The uncrewed aerial system application specific server 401 communicates with the uncrewed aerial system application enabler server 351 using a Us interface or reference point. The service enabler architecture layer server 301 communicates with both the uncrewed aerial system application enabler server 351 and the uncrewed aerial system application specific server 401 using a SEAL-S interface or reference point.

The service enabler architecture layer server 301, acting as application function (AF), especially communicates with the telecommunications network 100, especially its core network 120, i.e., typically, 5G core network functions, over one or a plurality of the following interfaces or reference points towards network functions or services of the core network 120 (that are not explicitly shown in Figure 2):
-- an MB2-C/xMB-C interface or reference point (used for multicast communication),
-- a Nnef interface to an network exposure function, NEF, of the core network 120,
-- a Rx interface or reference point,
-- a T8 interface or reference point.

Especially according to the present invention, the uncrewed aerial system application enabler server 351 is also acting as application function (AF), and especially communicates with the telecommunications network 100, especially its core network 120, i.e., typically, 5G core network functions, over one or a plurality of the following interfaces or reference points towards network functions or services of the core network 120 (that are not explicitly shown in Figure 2):
-- an MB2-U interface or reference point (used for multicast communication),
-- an xMB-U interface or reference point (used for multicast communication),
-- a Nnef interface to an network exposure function, NEF, of the core network 120,
-- a T8 interface or reference point.

It is to be understood, that a plurality of uncrewed aerial system application specific servers 401 (corresponding to the uncrewed aerial system application specific server 401) are able to be present and part of the uncrewed aerial system application specific layer implementation 400 (but are not represented in Figure 2 for the sake of simplicity).

In Figure 3, a communication diagram between the uncrewed aerial system application enabler server 351, the location management server LMS, the uncrewed aerial system application specific server 401, and the uncrewed aerial system application enabler client 22/22' (via the telecommunications network 100) is schematically shown. In a first processing step 31, a subscription (by the uncrewed aerial system application enabler server 351, and with the location management server LMS) for monitoring of location occurs - especially according to clause 9.3.2.11 of TS23.434.

In a second processing step 32, the location management server LMS transmits a notification - especially according to clause 9.3.2.16 of TS23.434. In the second processing step 32, it is notified that the uncrewed aerial system user equipment 20/20' has entered the no-transmission zone.

In a third processing step 33, the uncrewed aerial system application enabler server 351 transmits an enforce no-transmission zone request message to the uncrewed aerial system application enabler client 22, 22', the enforce no-transmission zone request message indicating to stop using the no-transmission zone frequency.

In a fourth processing step 34, the uncrewed aerial system application enabler client 22, 22' transmits an enforce no-transmission zone response message to the uncrewed aerial system application enabler server 351.

In a fifth processing step 35, a no-transmission zone notification message is transmitted, by the uncrewed aerial system application enabler server 351, to the uncrewed aerial system application specific server 401.

In a sixth processing step 36, the location management server LMS transmits a notification - especially according to clause 9.3.2.16 of TS23.434. In the sixth processing step 36, it is notified that the uncrewed aerial system user equipment 20/20' has left the no-transmission zone.

In a seventh processing step 37, the uncrewed aerial system application enabler server 351 transmits an enforce no-transmission zone request message to the uncrewed aerial system application enabler client 22, 22', the enforce no-transmission zone request message indicating to start using the no-transmission zone frequency after leaving the no-transmission zone.

In an eighth processing step 38, the uncrewed aerial system application enabler client 22, 22' transmits an enforce no-transmission zone response message to the uncrewed aerial system application enabler server 351.

In a nineth processing step 39, a no-transmission zone notification message is transmitted, by the uncrewed aerial system application enabler server 351, to the uncrewed aerial system application specific server 401.

In Figure 4, a representation of the communication of the uncrewed aerial system application enabler server 351 with the uncrewed aerial system application enabler client 22/22' is schematically shown (using the telecommunications network 100, represented by the reference sign 5GC, representing the core network 120). The communication between the uncrewed aerial system application enabler server 351 and the uncrewed aerial system application enabler client 22/22' comprises - in a first processing step 41 - the uncrewed aerial system application enabler client 22/22' detecting that it is out of a no-transmission zone. In a second processing step 42, the uncrewed aerial system application enabler client 22/22' transmits an operation permission request message to the uncrewed aerial system application enabler server 351. In a third processing step 43, the uncrewed aerial system application enabler server 351 checks with the location management server LMS if the uncrewed aerial system user equipment 20, 20' (i.e. the uncrewed aerial system application enabler client 22/22') is out of the no-transmission zone. In a fourth processing step 44, the uncrewed aerial system application enabler server 351 transmits an operation permission response message to the uncrewed aerial system user equipment 20, 20' (i.e. to the uncrewed aerial system application enabler client 22/22').

Especially, after the fourth processing step 44, the uncrewed aerial system application enabler server 351 notifies the uncrewed aerial system application specific server 401 that the uncrewed aerial system user equipment 20/20' is out of the no-transmission zone.

According to the present invention, it is advantageously possible to assure that the UAV UE is able to be restricted to transmit only in (or using) specific frequencies (or in specific frequency bands) when located in specific geographic areas. It is expected that the UAV UE executes specific policy configured in it. According to the present invention, a solution is provided how to configure such policy in UAV UE, especially based on the existing specification TS23.255 Application layer support for Uncrewed Aerial System (UAS).

It is to be made sure that the UAV and UAV-C - i.e. uncrewed aerial system user equipments - stops the transmission in the specific no-transmission zone, i.e. it shall be restricted to use specific frequency when in no-transmission zone. When reaching a specific geographical area (where the transmission is forbidden (or restricted) because of the no-transmission zone policy), the UEs (UAE client, UAV, UAV-C) will stop transmitting (stop using the forbidden frequency for transmission).

It is expected the UAE-S (uncrewed aerial system application enabler server 351) to monitor no-transmission zone areas and to send message for deactivating transmission on specific frequency to all UAVs which are about to enter the no-transmission zone.

The uncrewed aerial system application enabler server 351 can use the existing procedure (9.3.11.2 - Monitoring Location Deviation procedure of TS23.434) in SEAL to subscribe for specific geographical area monitoring which is the geographical area of NTZ. Based on Table 9.3.2.11-1 of TS 23.434 the AUE-S acting as VAL server will subscribe to receive notifications for all UAV/UAV-S registered by the UAE-S According to the existing procedure when UAE-S registered UEs/UAVs enters the specific NTZ area (geographical area), then the notification message is sent towards the UAE-S containing a List of UEs either moved in to the location area or moved out of the location area (Table 9.3.2.16-1 of TS23.434). The UAE server checks if this UE identification is registered as UAS (UAV/UAV-C). The UAE-S sends NTZ request towards these UE clients/AUVs to indicate/force stopping of the transmission in the specific frequency and provides details as geographical area, specific altitude for which the NTZ is valid. The UE confirms the execution of this request with NTZ reply message.

If the UAV uses another non-forbidden frequency, the SEAL/LMS can detect when the UAV has left the NTZ and send notification to the UAE-S. The UAE-S will then send request towards the UAV for the specific NTZ frequency allowance as the UAV is out of the specified geographic area.

If the UAV does not use another non-forbidden frequency, after going out of the NTZ will contact the UAV server asking for permission to further use the frequency. The UAE-S will do a check where the UE is and will send confirmation for use of the frequency.

## Claims

1. Method for using a service enabler architecture layer for verticals, SEAL, (300) and an uncrewed aerial system application enabler layer, UAE layer, (350) with an uncrewed aerial system application specific layer (400) implementation for managing no-transmission zone communication and/or for enforcing no-transmission zone information with at least one uncrewed aerial system user equipment (20, 20'), **characterized in that**, a service enabler architecture layer server (301), an uncrewed aerial system application enabler server (351), a uncrewed aerial system application specific server (401) and a location management server (LMS) are used and the at least one uncrewed aerial system user equipment (20, 20') comprises, respectively, an uncrewed aerial system application specific client (21, 21'), an uncrewed aerial system application enabler client (22, 22'), and a service enabler architecture layer client (23, 23'),
wherein, in order for managing no-transmission zone communication and/or for enforcing no-transmission zone information to the at least one uncrewed aerial system user equipment (20, 20'), the method comprises the following steps:
-- in a first step, the uncrewed aerial system application enabler server (351) receives a location information from the location management server (LMS),
-- in a second step, the uncrewed aerial system application enabler server (351) communicates with both the uncrewed aerial system application enabler client (22, 22') and the uncrewed aerial system application specific server (401), wherein the communication between the uncrewed aerial system application enabler server (351) and the uncrewed aerial system application enabler client (22, 22') comprises
-- an enforce no-transmission zone request message that is transmitted by the uncrewed aerial system application enabler server (351) and received by the uncrewed aerial system application enabler client (22, 22'), the enforce no-transmission zone request message comprising an information regarding, or indicating, frequency bands and instructing the uncrewed aerial system application enabler client (22, 22') to stop using the indicated frequency bands for transmission within the no-transmission zone, and
-- an enforce no-transmission zone response message that is transmitted by the uncrewed aerial system application enabler client (22, 22') and received by the uncrewed aerial system application enabler server (351).

2. Method according to claim 1, wherein the communication between the uncrewed aerial system application enabler server (351) and the uncrewed aerial system application enabler client (22, 22') comprises
-- an enforce no-transmission zone request message that is transmitted by the uncrewed aerial system application enabler server (351) and received by the uncrewed aerial system application enabler client (22, 22'), and
-- an enforce no-transmission zone response message that is transmitted by the uncrewed aerial system application enabler client (22, 22') and received by the uncrewed aerial system application enabler server (351),
wherein especially and subsequently a no-transmission zone notification message is transmitted, by the uncrewed aerial system application enabler server (351), to the uncrewed aerial system application specific server (401).

3. Method according to one of the preceding claims, wherein the communication between the uncrewed aerial system application enabler server (351) and the uncrewed aerial system application enabler client (22, 22') furthermore comprises
-- an operation permission request message that is transmitted by the uncrewed aerial system application enabler client (22, 22') and received by the uncrewed aerial system application enabler server (351), and
-- an operation permission response message that is transmitted by the uncrewed aerial system application enabler server (351) and received by the uncrewed aerial system application enabler client (22, 22').

4. Method according to one of the preceding claims, wherein the enforce no-transmission zone request message comprises:
-- an uncrewed aerial system identifier information,
-- an information regarding, or indicating, an area for deactivation transmission,
-- a specific time window for deactivating the transmission,
-- an information regarding, or indicating, frequency bands,
-- an information regarding, or indicating, an altitude or an altitude range of, regarding, the no-transmission zone.

5. Method according to one of the preceding claims, wherein the no-transmission zone notification message comprises:
-- an uncrewed aerial system identifier information,
-- an information regarding, or indicating, whether transmission is switched on or off,
-- an information regarding, or indicating, time,
-- an information regarding, or indicating, location information and altitude.

6. Method according to one of the preceding claims, wherein the enforce no-transmission zone response message comprises an enforce response result information, especially indicating a positive or negative result of the enforce no-transmission zone request message.

7. Method according to one of the preceding claims, wherein the operation permission request message comprises:
-- an uncrewed aerial system identifier information,
-- an information regarding, or indicating, frequency bands,
-- an information regarding, or indicating, location information and altitude, especially location information of the uncrewed aerial system application enabler client (22, 22'), or the uncrewed aerial system, at the time when the operation permission request message is sent,
-- an information regarding, or indicating, time, especially the specific time when the uncrewed aerial system application enabler client (22, 22'), or the uncrewed aerial system, has left the no-transmission zone.

8. Method according to one of the preceding claims, wherein the operation permission response message comprises a permission response result information, especially indicating a positive or negative result of the operation permission request message.

9. System or telecommunications network (100) for using a service enabler architecture layer for verticals, SEAL, (300) and an uncrewed aerial system application enabler layer, UAE layer, (350) with an uncrewed aerial system application specific layer (400) implementation for managing no-transmission zone communication and/or for enforcing no-transmission zone information with at least one uncrewed aerial system user equipment (20, 20'),
**characterized in that**, a service enabler architecture layer server (301), an uncrewed aerial system application enabler server (351), a uncrewed aerial system application specific server (401) and a location management server (LMS) are used and the at least one uncrewed aerial system user equipment (20, 20') comprises, respectively, an uncrewed aerial system application specific client (21, 21'), an uncrewed aerial system application enabler client (22, 22'), and a service enabler architecture layer client (23, 23'),
wherein, in order for managing no-transmission zone communication and/or for enforcing no-transmission zone information to the at least one uncrewed aerial system user equipment (20, 20'), the system of telecommunications network (100) is configured such that the uncrewed aerial system application enabler server (351) receives a location information from the location management server (LMS), and the uncrewed aerial system application enabler server (351) communicates with both the uncrewed aerial system application enabler client (22, 22') and the uncrewed aerial system application specific server (401), wherein the communication between the uncrewed aerial system application enabler server (351) and the uncrewed aerial system application enabler client (22, 22') comprises an enforce no-transmission zone request message instructing to stop using indicated frequency bands for transmission within the no-transmission zone and an enforce no-transmission zone response message.

10. Uncrewed aerial system user equipment (20, 20') for being used with a service enabler architecture layer for verticals, SEAL, (400) and an uncrewed aerial system application enabler layer, UAE layer, (350) with an uncrewed aerial system application specific layer (400) implementation for managing no-transmission zone communication and/or for enforcing no-transmission zone information with at least one uncrewed aerial system user equipment (20, 20'),
**characterized in that**, a service enabler architecture layer server (301), an uncrewed aerial system application enabler server (351), a uncrewed aerial system application specific server (401) and a location management server (LMS) are used and the at least one uncrewed aerial system user equipment (20, 20') comprises, respectively, an uncrewed aerial system application specific client (21, 21'), an uncrewed aerial system application enabler client (22, 22'), and a service enabler architecture layer client (23, 23'),
wherein, in order for managing no-transmission zone communication and/or for enforcing no-transmission zone information to the at least one uncrewed aerial system user equipment (20, 20'), the uncrewed aerial system user equipment (20, 20') is configured such that the uncrewed aerial system application enabler server (351) receives a location information from the location management server (LMS), and the uncrewed aerial system application enabler server (351) communicates with both the uncrewed aerial system application enabler client (22, 22') and the uncrewed aerial system application specific server (401), wherein the uncrewed aerial system user equipment (20, 20') is configured such that the uncrewed aerial system application enabler client (22, 22') receives, from the uncrewed aerial system application enabler server (351), an enforce no-transmission zone request message comprising an information regarding, or indicating, frequency bands and instructing to stop using the indicated frequency bands for transmission within the no-transmission zone, and transmits, to the uncrewed aerial system application enabler server (351), an enforce no-transmission zone response message.

11. Program comprising a computer readable program code which, when executed on a computer and/or on an uncrewed aerial system user equipment (20, 20') and/or on a network node of a telecommunications network (100) and/or on an uncrewed aerial system application specific server (401) and/or on an uncrewed aerial system application enabler server (351) and/or on an uncrewed aerial system application enabler client (22, 22'), and/or in part on a network node of a telecommunications network (100) and/or in part on an uncrewed aerial system application specific server (401) and/or in part on an uncrewed aerial system application enabler server (351) and/or in part on an uncrewed aerial system application enabler client (22, 22'), causes the computer and/or the uncrewed aerial system user equipment (20, 20') and/or the network node of a telecommunications network (100) and/or the uncrewed aerial system application specific server (401) and/or the uncrewed aerial system application enabler server (351) and/or the uncrewed aerial system application enabler client (22, 22') to perform a method according one of claims 1 to 8.

12. Computer-readable medium comprising instructions which when executed on a computer and/or on an uncrewed aerial system user equipment (20, 20') and/or on a network node of a telecommunications network (100) and/or on an uncrewed aerial system application specific server (401) and/or on an uncrewed aerial system application enabler server (351) and/or on an uncrewed aerial system application enabler client (22, 22'), and/or in part on a network node of a telecommunications network (100) and/or in part on an uncrewed aerial system application specific server (401) and/or in part on an uncrewed aerial system application enabler server (351) and/or in part on an uncrewed aerial system application enabler client (22, 22'), causes the computer and/or the uncrewed aerial system user equipment (20, 20') and/or the network node of a telecommunications network (100) and/or the uncrewed aerial system application specific server (401) and/or the uncrewed aerial system application enabler server (351) and/or the uncrewed aerial system application enabler client (22, 22') to perform a method according to one of claims 1 to 8.

## Patentansprüche

1. Verfahren zur Verwendung einer Dienstaktivierungsarchitekturschicht (SEAL) (300) und einer Anwendungsaktivierungsschicht für unbemannte Luftfahrtsysteme (UAE-Schicht) (350) mit einer Implementierung einer anwendungsspezifischen Schicht für unbemannte Luftfahrtsysteme (400) zur Verwaltung der Kommunikation in Sendeverbotszonen und/oder zur Durchsetzung von Sendeverbotszonen-Informationen gegenüber mindestens einem Nutzergerät eines unbemannten Luftfahrtsystems (20, 20'),
**dadurch gekennzeichnet, dass** ein SEAL-Server (301), ein Anwendungsaktivierungsserver für unbemannte Luftfahrtsysteme (351), ein anwendungsspezifischer Server für unbemannte Luftfahrtsysteme (401) und ein Standortverwaltungsserver (LMS) verwendet werden und das mindestens eine Nutzergerät eines unbemannten Luftfahrtsystems (20, 20') jeweils einen anwendungsspezifischen Client für unbemannte Luftfahrtsysteme (21, 21'), einen Anwendungsaktivierungsclient für unbemannte Luftfahrtsysteme (22, 22') und einen SEAL-Client (23, 23') umfasst,
wobei das Verfahren zur Verwaltung der Kommunikation in Sendeverbotszonen und/oder zur Durchsetzung von Sendeverbotszonen-Informationen gegenüber dem mindestens einen Nutzergerät eines unbemannten Luftfahrtsystems (20, 20') die folgenden Schritte umfasst:
- in einem ersten Schritt empfängt der Anwendungsaktivierungsserver für unbemannte Luftfahrtsysteme (351) Standortinformation vom Standortverwaltungsserver (LMS),
- in einem zweiten Schritt kommuniziert der Anwendungsaktivierungsserver für unbemannte Luftfahrtsysteme (351) sowohl mit dem Anwendungsaktivierungsclient für unbemannte Luftfahrtsysteme (22, 22') als auch mit dem anwendungsspezifischen Server für unbemannte Luftfahrtsysteme (401), wobei die Kommunikation zwischen dem Anwendungsaktivierungsserver für unbemannte Luftfahrtsysteme (351) und dem Anwendungsaktivierungsclient für unbemannte Luftfahrtsysteme (22, 22') Folgendes umfasst:
- eine Anforderungsnachricht zur Durchsetzung der Sendeverbotszone, die vom Anwendungsaktivierungsserver für unbemannte Luftfahrtsysteme (351) übertragen und vom Anwendungsaktivierungsclient für unbemannte Luftfahrtsysteme (22, 22') empfangen wird, wobei die Anforderungsnachricht zur Durchsetzung der Sendeverbotszone eine Information bezüglich Frequenzbänder enthält und den Anwendungsaktivierungsclient für unbemannte Luftfahrtsysteme (22, 22') anweist, die angegebenen Frequenzbänder innerhalb der Sendeverbotszone nicht mehr für die Übertragung zu nutzen, und
- eine Antwortnachricht zur Durchsetzung der Sendeverbotszone, die vom Anwendungsaktivierungsclient für unbemannte Luftfahrtsysteme (22, 22') übertragen und vom Anwendungsaktivierungsserver für unbemannte Luftfahrtsysteme (351) empfangen wird.

2. Verfahren nach Anspruch 1, wobei die Kommunikation zwischen dem Anwendungsaktivierungsserver für unbemannte Luftfahrtsysteme (351) und dem Anwendungsaktivierungsclient für unbemannte Luftfahrtsysteme (22, 22') Folgendes umfasst:
- eine Anforderungsnachricht zur Durchsetzung der Sendeverbotszone, die vom Anwendungsaktivierungsserver für unbemannte Luftfahrtsysteme (351) übertragen und vom Anwendungsaktivierungsclient für unbemannte Luftfahrtsysteme (22, 22') empfangen wird, und
- eine Antwortnachricht zur Durchsetzung der Sendeverbotszone, die vom Anwendungsaktivierungsclient für unbemannte Luftfahrtsysteme (22, 22') übertragen und vom Anwendungsaktivierungsserver für unbemannte Luftfahrtsysteme (351) empfangen wird,
wobei insbesondere anschließend eine Benachrichtigungsnachricht zur Sendeverbotszone vom Anwendungsaktivierungsserver für unbemannte Luftfahrtsysteme (351) an den anwendungsspezifischen Server für unbemannte Luftfahrtsysteme (401) übertragen wird.

3. Verfahren nach einem der vorhergehenden Ansprüche, wobei die Kommunikation zwischen dem Anwendungsaktivierungsserver für unbemannte Luftfahrtsysteme (351) und dem Anwendungsaktivierungsclient für unbemannte Luftfahrtsysteme (22, 22') ferner Folgendes umfasst:
- eine Betriebserlaubnis-Anforderungsnachricht, die vom Anwendungsaktivierungsclient für unbemannte Luftfahrtsysteme (22, 22') übertragen und vom Anwendungsaktivierungsserver für unbemannte Luftfahrtsysteme (351) empfangen wird, und
- eine Betriebserlaubnis-Antwortnachricht, die vom Anwendungsaktivierungsserver für unbemannte Luftfahrtsysteme (351) übertragen und vom Anwendungsaktivierungsclient für unbemannte Luftfahrtsysteme (22, 22') empfangen wird.

4. Verfahren nach einem der vorhergehenden Ansprüche, wobei die Anforderungsnachricht zur Durchsetzung der Sendeverbotszone Folgendes umfasst:
- Kennung des unbemannten Luftfahrtsystems,
- eine Information bezüglich eines Bereichs zur Deaktivierung der Übertragung,
- ein bestimmtes Zeitfenster für die Deaktivierung der Übertragung,
- eine Information bezüglich Frequenzbändern,
- eine Information bezüglich einer Höhe / eines Höhenbereichs der Sendeverbotszone.

5. Verfahren nach einem der vorhergehenden Ansprüche, wobei die Benachrichtigungsnachricht zur Sendeverbotszone Folgendes umfasst:
- Kennung des unbemannten Luftfahrtsystems,
- eine Information darüber, ob die Übertragung ein- oder ausgeschaltet ist,
- eine Information bezüglich der Zeit,
- Standortinformation und Höhe / Höhenbereich.

6. Verfahren nach einem der vorhergehenden Ansprüche, wobei die Antwortnachricht zur Durchsetzung der Sendeverbotszone eine Ergebnisinformation zur Durchsetzungsantwort umfasst, die insbesondere ein positives oder negatives Ergebnis der Anforderungsnachricht zur Durchsetzung der Sendeverbotszone anzeigt.

7. Verfahren nach einem der vorhergehenden Ansprüche, wobei die Betriebserlaubnis-Anforderungsnachricht Folgendes umfasst:
- Kennung des unbemannten Luftfahrtsystems,
- eine Information bezüglich Frequenzbändern,
- Standortinformation und Höhe / Höhenbereich, insbesondere die Standortinformation des Anwendungsaktivierungsclients für unbemannte Luftfahrtsysteme (22, 22') oder des unbemannten Luftfahrtsystems zu dem Zeitpunkt, an dem die Betriebserlaubnis-Anforderungsnachricht gesendet wird,
- eine Information bezüglich der Zeit, insbesondere des genauen Zeitpunkts, zu dem der Anwendungsaktivierungsclient für unbemannte Luftfahrtsysteme (22, 22') oder das unbemannte Luftfahrtsystem die Sendeverbotszone verlassen hat.

8. Verfahren nach einem der vorhergehenden Ansprüche, wobei die Betriebserlaubnis-Antwortnachricht eine Ergebnisinformation zur Erlaubnisantwort umfasst, die insbesondere ein positives oder negatives Ergebnis der Betriebserlaubnis-Anforderungsnachricht anzeigt.

9. System oder Telekommunikationsnetz (100) zur Verwendung einer Dienstaktivierungsarchitekturschicht (SEAL) (300) und einer Anwendungsaktivierungsschicht für unbemannte Luftfahrtsysteme (UAE-Schicht) (350) mit einer Implementierung einer anwendungsspezifischen Schicht für unbemannte Luftfahrtsysteme (400) zur Verwaltung der Kommunikation in Sendeverbotszonen und/oder zur Durchsetzung von Sendeverbotszonen-Informationen gegenüber mindestens einem Nutzergerät eines unbemannten Luftfahrtsystems (20, 20'),
**dadurch gekennzeichnet, dass** ein SEAL-Server (301), ein Anwendungsaktivierungsserver für unbemannte Luftfahrtsysteme (351), ein anwendungsspezifischer Server für unbemannte Luftfahrtsysteme (401) und ein Standortverwaltungsserver (LMS) verwendet werden und das mindestens eine Nutzergerät eines unbemannten Luftfahrtsystems (20, 20') jeweils einen anwendungsspezifischen Client für unbemannte Luftfahrtsysteme (21, 21'), einen Anwendungsaktivierungsclient für unbemannte Luftfahrtsysteme (22, 22') und einen SEAL-Client (23, 23') umfasst,
wobei das System oder Telekommunikationsnetz (100) zur Verwaltung der Kommunikation in Sendeverbotszonen und/oder zur Durchsetzung von Sendeverbotszonen-Informationen gegenüber dem mindestens einen Nutzergerät eines unbemannten Luftfahrtsystems (20, 20') derart konfiguriert ist, dass der Anwendungsaktivierungsserver für unbemannte Luftfahrtsysteme (351) Standortinformation vom Standortverwaltungsserver (LMS) empfängt und der Anwendungsaktivierungsserver für unbemannte Luftfahrtsysteme (351) sowohl mit dem Anwendungsaktivierungsclient für unbemannte Luftfahrtsysteme (22, 22') als auch mit dem anwendungsspezifischen Server für unbemannte Luftfahrtsysteme (401) kommuniziert, wobei die Kommunikation zwischen dem Anwendungsaktivierungsserver für unbemannte Luftfahrtsysteme (351) und dem Anwendungsaktivierungsclient für unbemannte Luftfahrtsysteme (22, 22') eine Anforderungsnachricht zur Durchsetzung der Sendeverbotszone, die anweist, die angegebenen Frequenzbänder innerhalb der Sendeverbotszone nicht mehr für die Übertragung zu nutzen, sowie eine Antwortnachricht zur Durchsetzung der Sendeverbotszone umfasst.

10. Nutzergerät eines unbemannten Luftfahrtsystems (20, 20') zur Verwendung mit einer Dienstaktivierungsarchitekturschicht (SEAL) (400) und einer Anwendungsaktivierungsschicht für unbemannte Luftfahrtsysteme (UAE-Schicht) (350) mit einer Implementierung einer anwendungsspezifischen Schicht für unbemannte Luftfahrtsysteme (400) zur Verwaltung der Kommunikation in Sendeverbotszonen und/oder zur Durchsetzung von Sendeverbotszonen-Informationen gegenüber mindestens einem Nutzergerät eines unbemannten Luftfahrtsystems (20, 20'),
**dadurch gekennzeichnet, dass** ein SEAL-Server (301), ein Anwendungsaktivierungsserver für unbemannte Luftfahrtsysteme (351), ein anwendungsspezifischer Server für unbemannte Luftfahrtsysteme (401) und ein Standortverwaltungsserver (LMS) verwendet werden und das mindestens eine Nutzergerät eines unbemannten Luftfahrtsystems (20, 20') jeweils einen anwendungsspezifischen Client für unbemannte Luftfahrtsysteme (21, 21'), einen Anwendungsaktivierungsclient für unbemannte Luftfahrtsysteme (22, 22') und einen SEAL-Client (23, 23') umfasst,
wobei das Nutzergerät eines unbemannten Luftfahrtsystems (20, 20') derart konfiguriert ist, dass der Anwendungsaktivierungsserver für unbemannte Luftfahrtsysteme (351) Standortinformation vom Standortverwaltungsserver (LMS) empfängt und der Anwendungsaktivierungsserver für unbemannte Luftfahrtsysteme (351) sowohl mit dem Anwendungsaktivierungsclient für unbemannte Luftfahrtsysteme (22, 22') als auch mit dem anwendungsspezifischen Server für unbemannte Luftfahrtsysteme (401) kommuniziert, wobei das Nutzergerät eines unbemannten Luftfahrtsystems (20, 20') derart konfiguriert ist, dass der Anwendungsaktivierungsclient für unbemannte Luftfahrtsysteme (22, 22') vom Anwendungsaktivierungsserver für unbemannte Luftfahrtsysteme (351) eine Anforderungsnachricht zur Durchsetzung der Sendeverbotszone empfängt, die eine Information bezüglich Frequenzbändern enthält und anweist, die angegebenen Frequenzbänder innerhalb der Sendeverbotszone nicht mehr für die Übertragung zu nutzen, und an den Anwendungsaktivierungsserver für unbemannte Luftfahrtsysteme (351) eine Antwortnachricht zur Durchsetzung der Sendeverbotszone überträgt.

11. Programm, das einen computerlesbaren Programmcode umfasst, der, wenn er auf einem Computer und/oder auf einem Nutzergerät eines unbemannten Luftfahrtsystems (20, 20') und/oder auf einem Netzknoten eines Telekommunikationsnetzes (100) und/oder auf einem anwendungsspezifischen Server für unbemannte Luftfahrtsysteme (401) und/oder auf einem Anwendungsaktivierungsserver für unbemannte Luftfahrtsysteme (351) und/oder auf einem Anwendungsaktivierungsclient für unbemannte Luftfahrtsysteme (22, 22') und/oder teilweise auf einem Netzknoten eines Telekommunikationsnetzes (100) und/oder teilweise auf einem anwendungsspezifischen Server für unbemannte Luftfahrtsysteme (401) und/oder teilweise auf einem Anwendungsaktivierungsserver für unbemannte Luftfahrtsysteme (351) und/oder teilweise auf einem Anwendungsaktivierungsclient für unbemannte Luftfahrtsysteme (22, 22') ausgeführt wird, den Computer und/oder das Nutzergerät eines unbemannten Luftfahrtsystems (20, 20') und/oder den Netzknoten eines Telekommunikationsnetzes (100) und/oder den anwendungsspezifischen Server für unbemannte Luftfahrtsysteme (401) und/oder den Anwendungsaktivierungsserver für unbemannte Luftfahrtsysteme (351) und/oder den Anwendungsaktivierungsclient für unbemannte Luftfahrtsysteme (22, 22') veranlasst, ein Verfahren nach einem der Ansprüche 1 bis 8 durchzuführen.

12. Computerlesbares Medium, das Anweisungen umfasst, die, wenn sie auf einem Computer und/oder auf einem Nutzergerät eines unbemannten Luftfahrtsystems (20, 20') und/oder auf einem Netzknoten eines Telekommunikationsnetzes (100) und/oder auf einem anwendungsspezifischen Server für unbemannte Luftfahrtsysteme (401) und/oder auf einem Anwendungsaktivierungsserver für unbemannte Luftfahrtsysteme (351) und/oder auf einem Anwendungsaktivierungsclient für unbemannte Luftfahrtsysteme (22, 22') und/oder teilweise auf einem Netzknoten eines Telekommunikationsnetzes (100) und/oder teilweise auf einem anwendungsspezifischen Server für unbemannte Luftfahrtsysteme (401) und/oder teilweise auf einem Anwendungsaktivierungsserver für unbemannte Luftfahrtsysteme (351) und/oder teilweise auf einem Anwendungsaktivierungsclient für unbemannte Luftfahrtsysteme (22, 22') ausgeführt werden, den Computer und/oder das Nutzergerät eines unbemannten Luftfahrtsystems (20, 20') und/oder den Netzknoten eines Telekommunikationsnetzes (100) und/oder den anwendungsspezifischen Server für unbemannte Luftfahrtsysteme (401) und/oder den Anwendungsaktivierungsserver für unbemannte Luftfahrtsysteme (351) und/oder den Anwendungsaktivierungsclient für unbemannte Luftfahrtsysteme (22, 22') veranlassen, ein Verfahren nach einem der Ansprüche 1 bis 8 durchzuführen.

## Revendications

1. Procédé d'utilisation d'une couche d'architecture d'activation de services (SEAL) (300) et d'une couche d'activation d'application pour systèmes aériens non habités (couche UAE) (350) avec une implémentation d'une couche spécifique à l'application pour systèmes aériens non habités (400) pour gérer la communication dans les zones d'interdiction de transmission et/ou pour appliquer des informations relatives aux zones d'interdiction de transmission à au moins un équipement utilisateur de système aérien non habité (20, 20'),
**caractérisé en ce qu'**un serveur de couche d'architecture d'activation de services (serveur SEAL) (301), un serveur d'activation d'application pour systèmes aériens non habités (351), un serveur spécifique à l'application pour systèmes aériens non habités (401) et un serveur de gestion de localisation (LMS) sont utilisés, et **en ce que** l'au moins un équipement utilisateur de système aérien non habité (20, 20') comprend respectivement un client spécifique à l'application pour systèmes aériens non habités (21, 21'), un client d'activation d'application pour systèmes aériens non habités (22, 22') et un client de couche d'architecture d'activation de services (client SEAL) (23, 23'),
le procédé, afin de gérer la communication dans les zones d'interdiction de transmission et/ou d'appliquer des informations relatives aux zones d'interdiction de transmission à l'au moins un équipement utilisateur de système aérien non habité (20, 20'), comprenant les étapes suivantes :
- dans une première étape, le serveur d'activation d'application pour systèmes aériens non habités (351) reçoit une information de localisation provenant du serveur de gestion de localisation (LMS) ;
- dans une deuxième étape, le serveur d'activation d'application pour systèmes aériens non habités (351) communique à la fois avec le client d'activation d'application pour systèmes aériens non habités (22, 22') et avec le serveur spécifique à l'application pour systèmes aériens non habités (401), la communication entre le serveur d'activation d'application pour systèmes aériens non habités (351) et le client d'activation d'application pour systèmes aériens non habités (22, 22') comprenant :
- un message de demande d'application de la zone d'interdiction de transmission, transmis par le serveur d'activation d'application pour systèmes aériens non habités (351) et reçu par le client d'activation d'application pour systèmes aériens non habités (22, 22'), le message de demande d'application de la zone d'interdiction de transmission comprenant une information concernant les bandes de fréquences et enjoignant au client d'activation d'application pour systèmes aériens non habités (22, 22') de cesser d'utiliser les bandes de fréquences indiquées pour la transmission à l'intérieur de la zone d'interdiction de transmission, et
- un message de réponse d'application de la zone d'interdiction de transmission, transmis par le client d'activation d'application pour systèmes aériens non habités (22, 22') et reçu par le serveur d'activation d'application pour systèmes aériens non habités (351).

2. Procédé selon la revendication 1, dans lequel la communication entre le serveur d'activation d'application pour systèmes aériens non habités (351) et le client d'activation d'application pour systèmes aériens non habités (22, 22') comprend :
- un message de demande d'application de la zone d'interdiction de transmission, transmis par le serveur d'activation d'application pour systèmes aériens non habités (351) et reçu par le client d'activation d'application pour systèmes aériens non habités (22, 22'), et
- un message de réponse d'application de la zone d'interdiction de transmission, transmis par le client d'activation d'application pour systèmes aériens non habités (22, 22') et reçu par le serveur d'activation d'application pour systèmes aériens non habités (351),
un message de notification de zone d'interdiction de transmission étant notamment transmis ensuite par le serveur d'activation d'application pour systèmes aériens non habités (351) au serveur spécifique à l'application pour systèmes aériens non habités (401).

3. Procédé selon l'une des revendications précédentes, dans lequel la communication entre le serveur d'activation d'application pour systèmes aériens non habités (351) et le client d'activation d'application pour systèmes aériens non habités (22, 22') comprend en outre :
- un message de demande d'autorisation d'exploitation, transmis par le client d'activation d'application pour systèmes aériens non habités (22, 22') et reçu par le serveur d'activation d'application pour systèmes aériens non habités (351), et
- un message de réponse d'autorisation d'exploitation, transmis par le serveur d'activation d'application pour systèmes aériens non habités (351) et reçu par le client d'activation d'application pour systèmes aériens non habités (22, 22').

4. Procédé selon l'une des revendications précédentes, dans lequel le message de demande d'application de la zone d'interdiction de transmission comprend :
- une information d'identification du système aérien non habité ;
- une information concernant, ou indiquant, une zone de désactivation de la transmission ;
- une fenêtre temporelle spécifique pour la désactivation de la transmission ;
- une information concernant, ou indiquant, les bandes de fréquences ;
- une information concernant, ou indiquant, une altitude / plage d'altitude de la zone d'interdiction de transmission.

5. Procédé selon l'une des revendications précédentes, dans lequel le message de notification de zone d'interdiction de transmission comprend :
- une information d'identification du système aérien non habité ;
- une information concernant, ou indiquant, l'état activé ou désactivé de la transmission ;
- une information concernant, ou indiquant, l'heure ;
- une information de localisation et une altitude / plage d'altitude.

6. Procédé selon l'une des revendications précédentes, dans lequel le message de réponse d'application de la zone d'interdiction de transmission comprend une information de résultat de réponse d'application, indiquant notamment un résultat positif ou négatif du message de demande d'application de la zone d'interdiction de transmission.

7. Procédé selon l'une des revendications précédentes, dans lequel le message de demande d'autorisation d'exploitation comprend :
- une information d'identification du système aérien non habité ;
- une information concernant, ou indiquant, les bandes de fréquences ;
- une information de localisation et une altitude / plage d'altitude, notamment l'information de localisation du client d'activation d'application pour systèmes aériens non habités (22, 22') ou du système aérien non habité au moment où le message de demande d'autorisation d'exploitation est envoyé ;
- une information concernant l'heure, notamment le moment précis où le client d'activation d'application pour systèmes aériens non habités (22, 22') ou le système aérien non habité a quitté la zone d'interdiction de transmission.

8. Procédé selon l'une des revendications précédentes, dans lequel le message de réponse d'autorisation d'exploitation comprend une information de résultat de réponse d'autorisation, indiquant notamment un résultat positif ou négatif du message de demande d'autorisation d'exploitation.

9. Système ou réseau de télécommunications (100) pour l'utilisation d'une couche d'architecture d'activation de services (SEAL) (300) et d'une couche d'activation d'application pour systèmes aériens non habités (couche UAE) (350) avec une implémentation d'une couche spécifique à l'application pour systèmes aériens non habités (400) pour gérer la communication dans les zones d'interdiction de transmission et/ou pour appliquer des informations relatives aux zones d'interdiction de transmission à au moins un équipement utilisateur de système aérien non habité (20, 20'),
**caractérisé en ce qu'**un serveur de couche d'architecture d'activation de services (serveur SEAL) (301), un serveur d'activation d'application pour systèmes aériens non habités (351), un serveur spécifique à l'application pour systèmes aériens non habités (401) et un serveur de gestion de localisation (LMS) sont utilisés, et **en ce que** l'au moins un équipement utilisateur de système aérien non habité (20, 20') comprend respectivement un client spécifique à l'application pour systèmes aériens non habités (21, 21'), un client d'activation d'application pour systèmes aériens non habités (22, 22') et un client de couche d'architecture d'activation de services (client SEAL) (23, 23'),
le système ou réseau de télécommunications (100) étant configuré, afin de gérer la communication dans les zones d'interdiction de transmission et/ou d'appliquer des informations relatives aux zones d'interdiction de transmission à l'au moins un équipement utilisateur de système aérien non habité (20, 20'), de telle sorte que le serveur d'activation d'application pour systèmes aériens non habités (351) reçoit une information de localisation provenant du serveur de gestion de localisation (LMS), et que le serveur d'activation d'application pour systèmes aériens non habités (351) communique à la fois avec le client d'activation d'application pour systèmes aériens non habités (22, 22') et avec le serveur spécifique à l'application pour systèmes aériens non habités (401), la communication entre le serveur d'activation d'application pour systèmes aériens non habités (351) et le client d'activation d'application pour systèmes aériens non habités (22, 22') comprenant un message de demande d'application de la zone d'interdiction de transmission enjoignant de cesser d'utiliser les bandes de fréquences indiquées pour la transmission à l'intérieur de la zone d'interdiction de transmission, ainsi qu'un message de réponse d'application de la zone d'interdiction de transmission.

10. Équipement utilisateur de système aérien non habité (20, 20') destiné à être utilisé avec une couche d'architecture d'activation de services (SEAL) (400) et une couche d'activation d'application pour systèmes aériens non habités (couche UAE) (350) avec une implémentation d'une couche spécifique à l'application pour systèmes aériens non habités (400) pour gérer la communication dans les zones d'interdiction de transmission et/ou pour appliquer des informations relatives aux zones d'interdiction de transmission à au moins un équipement utilisateur de système aérien non habité (20, 20'),
**caractérisé en ce qu'**un serveur de couche d'architecture d'activation de services (serveur SEAL) (301), un serveur d'activation d'application pour systèmes aériens non habités (351), un serveur spécifique à l'application pour systèmes aériens non habités (401) et un serveur de gestion de localisation (LMS) sont utilisés, et **en ce que** l'au moins un équipement utilisateur de système aérien non habité (20, 20') comprend respectivement un client spécifique à l'application pour systèmes aériens non habités (21, 21'), un client d'activation d'application pour systèmes aériens non habités (22, 22') et un client de couche d'architecture d'activation de services (client SEAL) (23, 23'),
l'équipement utilisateur de système aérien non habité (20, 20') étant configuré de telle sorte que le serveur d'activation d'application pour systèmes aériens non habités (351) reçoit une information de localisation provenant du serveur de gestion de localisation (LMS), et que le serveur d'activation d'application pour systèmes aériens non habités (351) communique à la fois avec le client d'activation d'application pour systèmes aériens non habités (22, 22') et avec le serveur spécifique à l'application pour systèmes aériens non habités (401), l'équipement utilisateur de système aérien non habité (20, 20') étant configuré de telle sorte que le client d'activation d'application pour systèmes aériens non habités (22, 22') reçoit du serveur d'activation d'application pour systèmes aériens non habités (351) un message de demande d'application de la zone d'interdiction de transmission comprenant une information concernant les bandes de fréquences et enjoignant de cesser d'utiliser les bandes de fréquences indiquées pour la transmission à l'intérieur de la zone d'interdiction de transmission, et transmet au serveur d'activation d'application pour systèmes aériens non habités (351) un message de réponse d'application de la zone d'interdiction de transmission.

11. Programme comprenant un code de programme lisible par ordinateur qui, lorsqu'il est exécuté sur un ordinateur et/ou sur un équipement utilisateur de système aérien non habité (20, 20') et/ou sur un nœud de réseau d'un réseau de télécommunications (100) et/ou sur un serveur spécifique à l'application pour systèmes aériens non habités (401) et/ou sur un serveur d'activation d'application pour systèmes aériens non habités (351) et/ou sur un client d'activation d'application pour systèmes aériens non habités (22, 22'), et/ou partiellement sur un nœud de réseau d'un réseau de télécommunications (100) et/ou partiellement sur un serveur spécifique à l'application pour systèmes aériens non habités (401) et/ou partiellement sur un serveur d'activation d'application pour systèmes aériens non habités (351) et/ou partiellement sur un client d'activation d'application pour systèmes aériens non habités (22, 22'), amène l'ordinateur et/ou l'équipement utilisateur de système aérien non habité (20, 20') et/ou le nœud de réseau d'un réseau de télécommunications (100) et/ou le serveur spécifique à l'application pour systèmes aériens non habités (401) et/ou le serveur d'activation d'application pour systèmes aériens non habités (351) et/ou le client d'activation d'application pour systèmes aériens non habités (22, 22') à exécuter un procédé selon l'une des revendications 1 à 8.

12. Support lisible par ordinateur comprenant des instructions qui, lorsqu'elles sont exécutées sur un ordinateur et/ou sur un équipement utilisateur de système aérien non habité (20, 20') et/ou sur un nœud de réseau d'un réseau de télécommunications (100) et/ou sur un serveur spécifique à l'application pour systèmes aériens non habités (401) et/ou sur un serveur d'activation d'application pour systèmes aériens non habités (351) et/ou sur un client d'activation d'application pour systèmes aériens non habités (22, 22'), et/ou partiellement sur un nœud de réseau d'un réseau de télécommunications (100) et/ou partiellement sur un serveur spécifique à l'application pour systèmes aériens non habités (401) et/ou partiellement sur un serveur d'activation d'application pour systèmes aériens non habités (351) et/ou partiellement sur un client d'activation d'application pour systèmes aériens non habités (22, 22'), amènent l'ordinateur et/ou l'équipement utilisateur de système aérien non habité (20, 20') et/ou le nœud de réseau d'un réseau de télécommunications (100) et/ou le serveur spécifique à l'application pour systèmes aériens non habités (401) et/ou le serveur d'activation d'application pour systèmes aériens non habités (351) et/ou le client d'activation d'application pour systèmes aériens non habités (22, 22') à exécuter un procédé selon l'une des revendications 1 à 8.
